(19) Europäisches Patentamt
European Patent Office
Office européen des brevets

(11) **EP 3 915 178 B1**

(12) **EUROPÄISCHE PATENTSCHRIFT**

(45) Veröffentlichungstag und Bekanntmachung des Hinweises auf die Patenterteilung:
**14.02.2024 Patentblatt 2024/07**

(21) Anmeldenummer: **19820707.8**

(22) Anmeldetag: **09.12.2019**

(51) Internationale Patentklassifikation (IPC):
**H02G 13/00** (2006.01)

(52) Gemeinsame Patentklassifikation (CPC):
**H02G 13/40; H02G 13/80**

(86) Internationale Anmeldenummer:
**PCT/EP2019/084258**

(87) Internationale Veröffentlichungsnummer:
**WO 2020/151868 (30.07.2020 Gazette 2020/31)**

(54) **BLITZSTROMABLEITVORRICHTUNG**

LIGHTNING CURRENT ARRESTER DEVICE

DISPOSITIF DE DÉRIVATION DU COURANT DE FOUDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2019 DE 102019101577**

(43) Veröffentlichungstag der Anmeldung:
**01.12.2021 Patentblatt 2021/48**

(73) Patentinhaber: **OBO Bettermann Hungary Kft. 2347 Bugyi (HU)**

(72) Erfinder:
• **MEPPELINK, Jan 59494 Soest (DE)**

• **TRINKWALD, Jürgen 58710 Menden (DE)**
• **BISCHOFF, Martin 58730 Fröndenberg (DE)**

(74) Vertreter: **Köchling, Conrad-Joachim Patentanwälte Köchling, Döring PartG mbB Fleyer Strasse 135 58097 Hagen (DE)**

(56) Entgegenhaltungen:
**EP-A1- 1 760 855      EP-A2- 0 228 984
DE-A1- 10 228 665      DE-A1-102015 009 426**

EP 3 915 178 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Blitzstromableitvorrichtung gemäß Oberbegriff des Anspruches 1.

Eine derartige Vorrichtung ist aus der EP 0228 984 A2 bekannt.

Insbesondere betrifft die Erfindung Möglichkeiten der Zustandsbestimmung der Isolierung und der äußeren Schicht aus leitendem Material einer isolierten Ableitung eines äußeren Blitzschutzsystems.

Die Isolation oder auch die äußere Leitschicht kann durch fehlerhaften Transport, falsche Lagerung oder nicht fachgerechte Montage sowie durch einen elektrischen Durchschlag während eines Blitzeinschlags beschädigt werden. Daher ist man bestrebt, diese Beschädigungen bei der regelmäßig stattfindenden Überprüfung eines äußeren Blitzschutzsystems oder insbesondere nach einem registrierten Blitzeinschlag festzustellen.

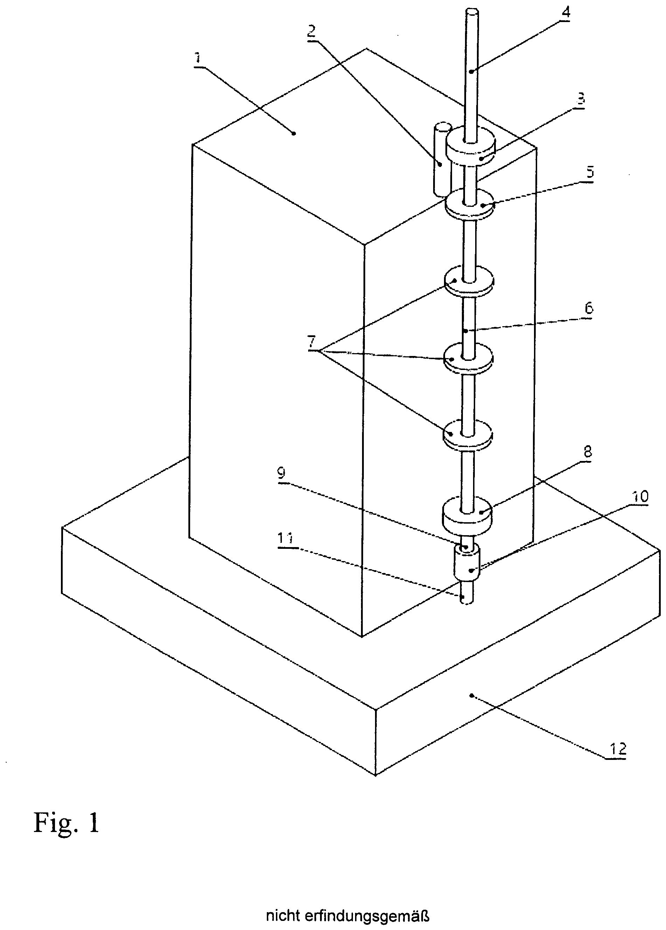

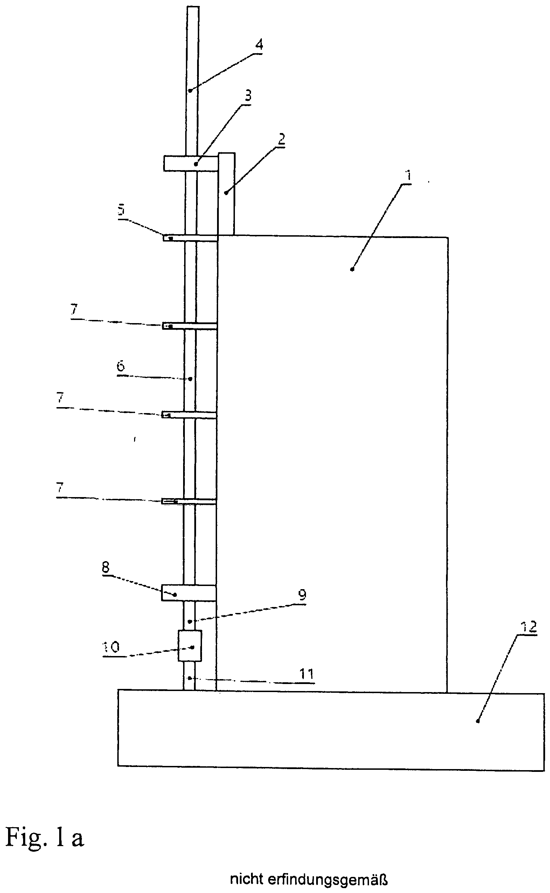

Der Stand der Technik beschreibt solche isolierten Ableitungen eines äußeren Blitzschutzsystems beispielsweise in der EP 1 760 855 B1, aber auch in der IEC TS 62561-8. In Figur 1 ist eine beispielhafte Installation gemäß Stand der Technik dargestellt. Auf der baulichen Anlage, beispielsweise einem Gebäudekörper 1, ist eine mit einem Isolator 2 beabstandete Fangeinrichtung 4 angeordnet, die mit einem ersten Anschlussteil 3 mit der isolierten Ableitung 6 verbunden ist. Das obere erste Anschlussteil 3 verbindet auch den elektrischen Leiter 6a mit der äußeren leitenden Schicht 6d der isolierten Ableitung 6. Die isolierte Ableitung 6 wird auf der Höhe der baulichen Anlage (oben) mit einem elektrisch leitenden Verbindungsteil 5, beispielsweise einem Halter, an einen Potentialausgleichleiter des Gebäudes oder dergleichen angeschlossen. Weitere Befestigungshalter 7 dienen der Befestigung der isolierten Ableitung 6. Das untere zweite Anschlussteil 8 verbindet auch den elektrischen Leiter 6a mit der äußeren leitenden Schicht 6d der isolierten Ableitung 6. Eine lösbare Trennstellenklemme 10 verbindet im Ausführungsbeispiel das untere zweite Anschlussteil 8 mit dem erdnahen Endbereich 9 als elektrischer Leiter 6a und stellt somit eine Verbindung zum Erdungssystem der baulichen Anlage beziehungsweise zum Erdreich 12 her.

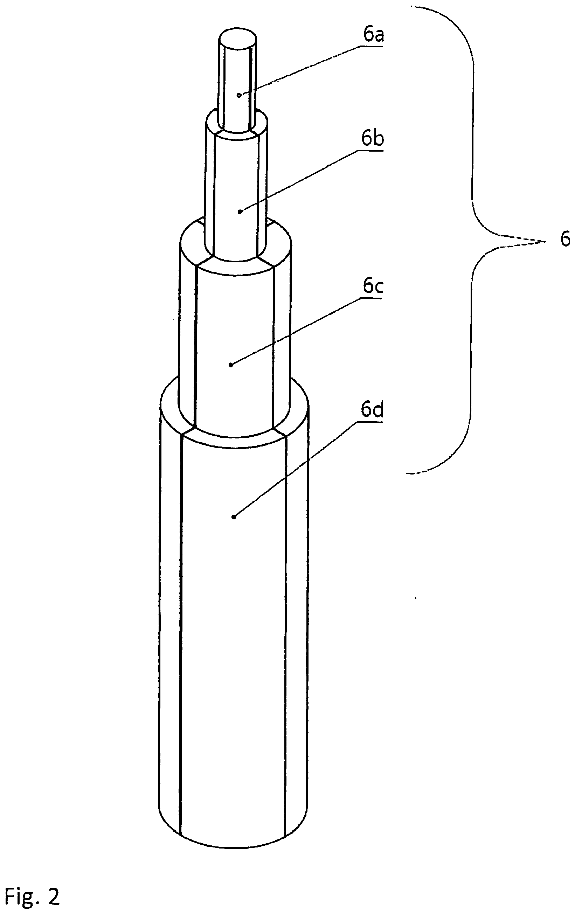

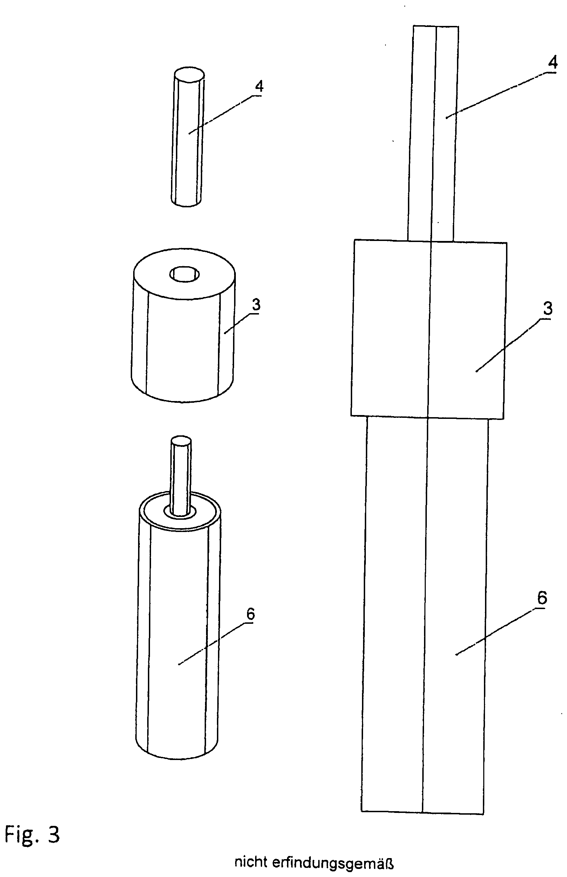

Figur 1a zeigt die Installation in Seitenansicht. Eine beispielhafte und bevorzugte isolierte Ableitung 6 ist in Figur 2 gezeigt. Hierbei ist der elektrische Leiter 6a von einer leitenden Schicht (innere Leitschicht) 6b umgeben, gefolgt von einer Isolation 6c aus einem hochspannungsfesten Isolierstoff, wiederum gefolgt von einer leitenden Schicht 6d, die die äußere Leitschicht darstellt. Ein Beispiel für ein nicht-erfindungsgemässes Anschlussteil (3 oder 8) ist in Figur 3 gezeigt.

Die Figur zeigt die entsprechenden Komponenten in Explosionsdarstellung und im Zusammenbau.

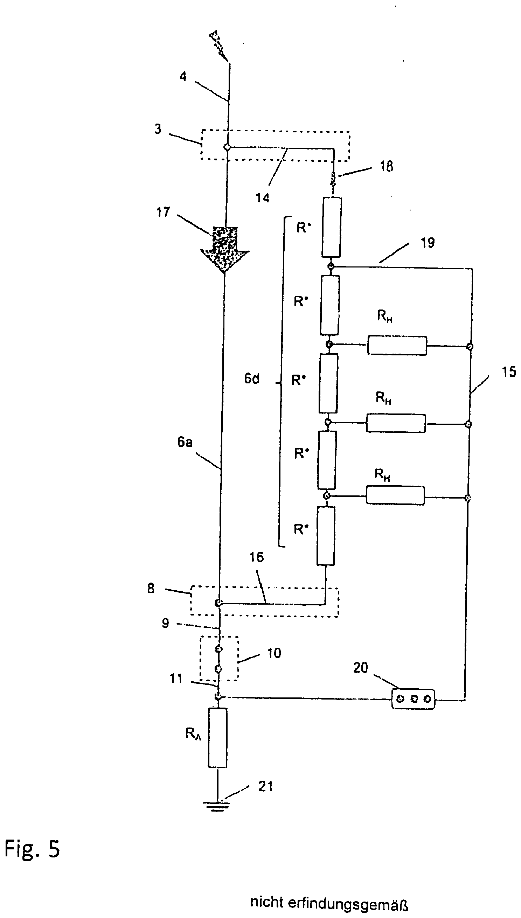

Ein elektrisches Ersatzschaltbild einer solchen Ausgestaltung gemäß Stand der Technik ist in Figur 5 gezeigt und bildet den Ausgangspunkt für die Erläuterung der Messmöglichkeiten.

Bei einem Blitzeinschlag, der oben durch den gestuften Pfeil angegeben ist, fließt in die Fangeinrichtung 4 der größte Teil 17 des Blitzstromes über den elektrischen Leiter 6a zur fernen Erde 21 ab. Nur ein sehr geringer Teil 18 des Blitzstroms fließt über die äußere leitende Schicht R* (6d) der isolierten Ableitung 6 über symbolisierte Anschlussleitungen 19 und 15 beziehungsweise über eine Potentialausgleichschiene 20 zur fernen Erde 21 ab.

Als Folge von Beschädigungen oder als Folge eines Durchschlages der Isolation oder der äußeren Leitschicht 6d ist die gewünschte Funktion der isolierten Niederführung des Blitzstromes nicht mehr gegeben und ein Blitzteilstrom würde dann in das Gebäude eindringen können und dort Schäden an elektrischen und elektronischen Geräten verursachen.

Aus diesem Grunde wird bisher schon versucht, möglicherweise vorhandene Beschädigungen bei der in der angegebenen Norm vorgeschriebenen Überprüfung durch eine Messung festzustellen.

Messtechnische Zustandsprüfungen an hochspannungsfesten, isolierten Ableitungen mit Hochspannungsimpulsen, mit Stoßstromimpulsen oder mit einem Hybridgenerator werden aufgrund der Gefahr für Personen und Funktion elektrischer und elektronischer Einrichtungen als zu gefährlich und nicht praktikabel angesehen.

Daher besteht der Wunsch, eine Messung der Isolationseigenschaften einer isolierten Ableitung 6 auf der Erdseite, also unten, ohne Demontagearbeiten an der auf dem Dach befindlichen Fangeinrichtung 4 beziehungsweise an dem ersten Anschlussteil 3 vornehmen zu können.

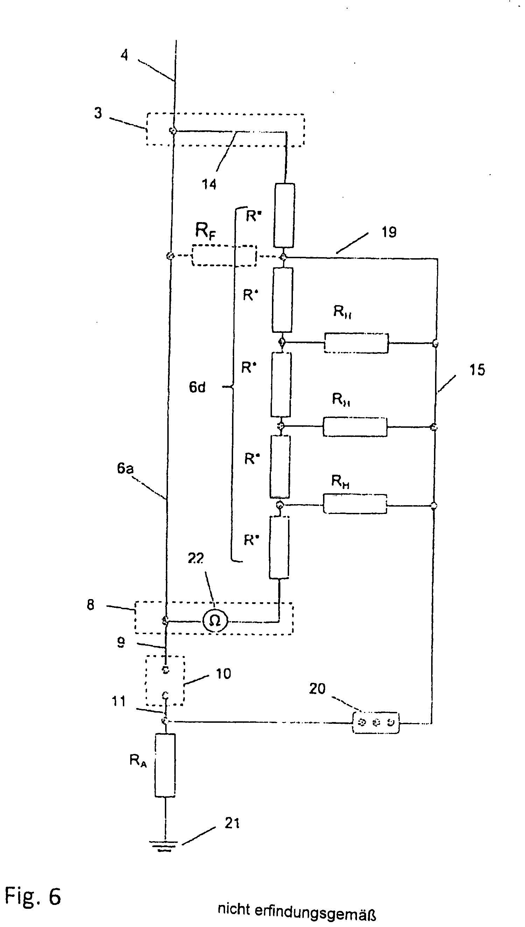

Dazu werden auf der Erdseite das zweite Anschlussteil 8 entfernt und die Trennstellenklemme 10 unterbrochen, sodass ein freier Zugang sowohl zum elektrischen Leiter 6a als auch zur äußeren leitenden Schicht 6d besteht. Damit ist die nach dem Stand der Technik übliche Messschaltung gemäß Ersatzschaltbild in Figur 6 gebildet. Hierbei ist der Isolationsfehler mit dem Widerstand $R_F$ eingezeichnet. Gemäß Stand der Technik wird versucht, mit einem Isolationsmessgerät 22, welches mit einer Spannung von ca. 1000 Volt Gleichspannung und einer Strombegrenzung auf wenige mA keine Gefahr für Personen und Geräte darstellt, den Isolationsfehler mit dem Widerstand $R_F$ zu messen.

Untersuchungen an isolierten Ableitungen mit künstlich eingebrachten Fehlstellen haben gezeigt, dass die Genauigkeit einer Isolationsmessung und die Genauigkeit der Fehlerortung sehr stark eingeschränkt ist. Dies ist dadurch begründet, dass auf der Seite der Fangeinrichtung 4 der elektrische Leiter 6a der isolierten Ableitung 6 und die äußere leitende Schicht 6d bestimmungsgemäß durch einen elektrischen Leiter 14 miteinander leitend verbunden sind.

Wie in der Figur 6 gezeigt, wird das Isolationsmessgerät 22 einen Wert anzeigen, der sich aus dem resultierenden Wert der Widerstände der drei Halter $R_H$ und vier Abschnitten der äußeren Leitschicht 6d (R*) sowie der in Reihe liegenden Parallelschaltung von $R_F$ und $R^*$ ergibt. Je weiter der Isolationsfehler $R_F$ von der Erdseite entfernt ist, desto weniger besteht die Möglichkeit, den Wert von $R_F$ aussagekräftig zu messen. Erschwerend kommt hinzu, dass der spezifische Widerstand der äußeren leitenden Schicht 6d ($R^*$) einen starken Temperaturkoeffizienten aufweist, sodass der spezifische Widerstand im Temperaturbereich von beispielsweise -20 °C bis +80 °C eine Änderung von bis zu 300 % erfährt.

Der Widerstand eines Isolationsfehlers $R_F$, der durch einen elektrischen Durchschlag der Isolation 6c entsteht, liegt im Bereich von einigen 100 kOhm bis MOhm, der Widerstand der äußeren leitenden Schicht 6d liegt im Bereich von einigen kOhm/m. Eine eindeutige Bestimmung eines Isolationsfehlers mit einem Isolationsmessgerät ist daher nicht möglich. Ein gangbarer Weg bestünde darin, die Verbindung 14 zwischen dem elektrischen Leiter 6a und der äußeren leitenden Schicht 6d am Ort des oberen Anschlussteiles 3 zu unterbrechen. Dies würde aber einen erheblichen Montageaufwand und damit entsprechende Kosten erfordern.

Ausgehend von diesem Stand der Technik hat sich die Erfindung die Aufgabe gestellt, eine einfache Möglichkeit zu entwickeln, bei der möglichst ohne Eingriff in die bestehende Isolation eine entsprechende Überprüfung des äußeren Blitzschutzsystems realisiert werden kann. Insbesondere soll eine Demontage des Anschlussteiles an dem Übergang zu der auf einem Gebäudekörper installierten Fangeinrichtung entbehrlich werden, und ebenso ein Übergang zur Erde.

Die Lösung dieser Aufgabe ist in Anspruch 1 (Kennzeichenteil) angegeben.

Vorteilhafte Ausgestaltungen der Erfindung sind in den Ansprüchen 2 bis 13 angegeben. Besonderheiten der erfindungsgemäßen Ausgestaltung sind im Anspruch 14 angegeben. Die Möglichkeiten zur Anordnung und Installation von Messgeräten sind in den Ansprüchen 15 bis 18 angegeben. Erfindungsgemäße adaptive Schaltelemente sind insbesondere in Anspruch 19 angegeben. Vorzugsweise und vorteilhafte Ausgestaltungen sind in den Ansprüchen 20 und 21 angegeben.

Gemäß der Erfindung kann ein einfaches handelsübliches Installationsprüfgerät an den Erdanschluss und die äußere leitende Schicht der isolierten Ableitung angeschlossen werden und liefert dann durch Messung des Isolationswiderstandes ein eindeutiges Ergebnis über den Zustand der Isolation.

Diese Messmöglichkeit wird durch das Einbringen von adaptiven Schaltelementen zwischen den elektrischen Leitern und die äußere leitenden Schicht der isolierten Ableitung erreicht. Die adaptiven Schaltelemente trennen die äußere Leitschicht vom elektrischen Leiter und erlaubt die Verwendung eines handelsüblichen Isolationsmessgerätes mit einer Spannung von etwa 100 bis 2.500 Volt bei einem für Personen ungefährlichen Messstrom von wenigen mA.

Bei einem Blitzeinschlag stellen die adaptiven Schaltelemente eine elektrisch leitende Verbindung zwischen dem elektrischen Leiter und der äußeren leitenden Schicht der isolierten Ableitung her und vermeidet so die Ausbildung von schädlichen Gleitentladungen.

Neben der Messung des Isolationswiderstandes besteht so auch die Möglichkeit zur Messung des elektrischen Verlustfaktors tan $\delta$ und der Kapazität C sowie die Messung von elektrischen Teilentladungen und die Ortung eines Isolationsfehlers mit einem üblichen Kabelfehlerortungsprüfgerät.

Erfindungsgemäß sollen Beschädigungen eindeutig an installierten isolierten Ableitungen 6 auch nach längerer Betriebsdauer messbar sein, ohne die Verbindung 14 zwischen dem elektrischen Leiter 6a und der äußeren leitenden Schicht 6d am Ort des oberen Anschlussteiles 3 zu unterbrechen. Diese Möglichkeit ist in den Zeichnungsfiguren nachstehend erläutert und gezeigt.

Erfindungsgemäß wird diese Anforderung dadurch gelöst, dass die elektrische Verbindung zwischen dem elektrischen Leiter 6a und der äußeren leitenden Schicht 6d nur durch ein adaptives erstes und zweites Schaltelement 23,24 realisiert wird. Die möglichen Ausprägungen eines solchen adaptiven Schaltelementes sind in den Ansprüchen und in der Beschreibung angegeben.

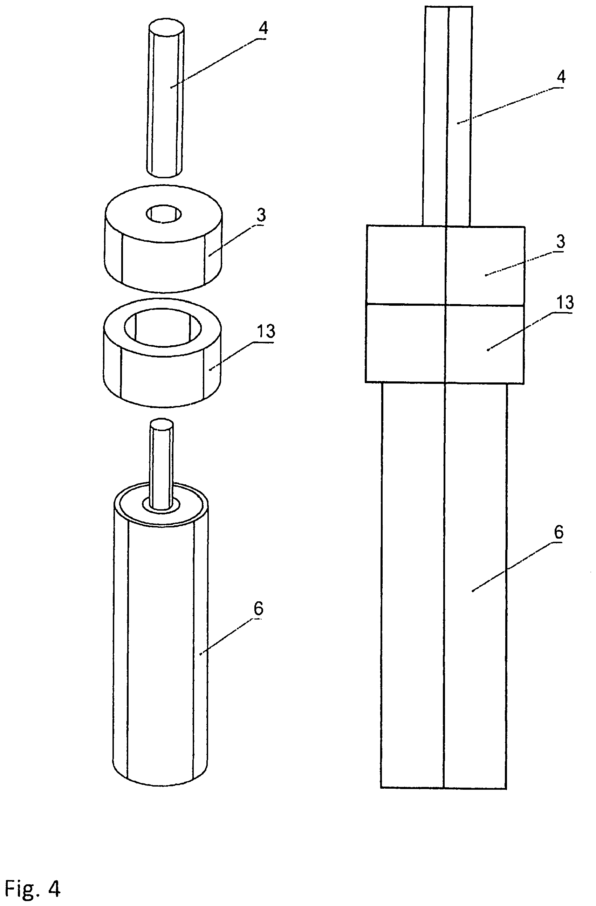

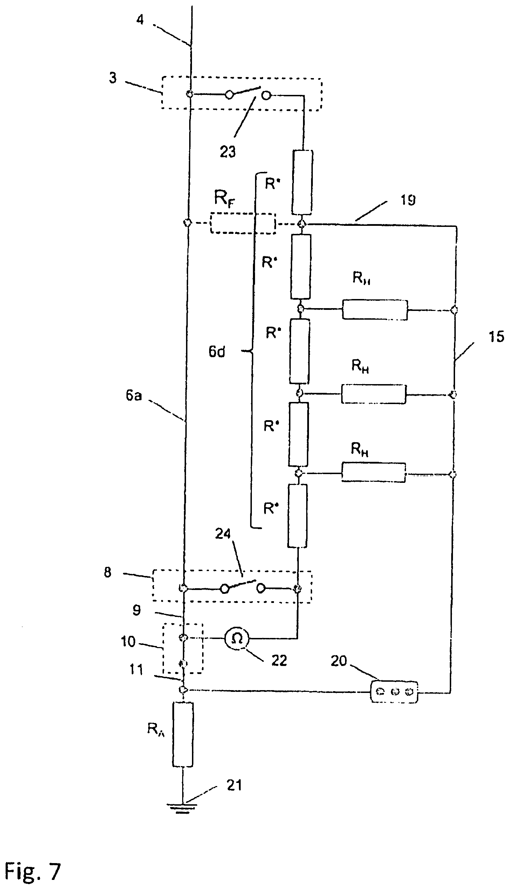

Die Figur 4 zeigt beispielhaft die geometrische Anordnung eines Gehäuses 13 mit adaptivem Schaltelement, welches in der elektrischen Verbindung zwischen dem ersten Anschlussteil 3 und der äußeren leitenden Schicht 6d kontaktiert ist. In der Figur 4 ist die Fangeinrichtung 4 mit dem ersten Anschlussteil 3 gezeigt. Darunter ist ein Gehäuse 13 mit einem adaptiven Schaltelement gezeigt, welches das mit dem elektrischen Leiter 6a beziehungsweise mit der Fangeinrichtung 4 verbundene erste Anschlussteil 3 mit der äußeren leitenden Schicht 6d der isolierten Ableitung 6 erfindungsgemäß verbindet. Das elektrische Ersatzschaltbild einer isolierten Ableitung 6 mit erstem Anschlussteil 3 beziehungsweise zweitem Anschlussteil 8 und adaptiven erstem Schaltelement 23 beziehungsweise zweiten Schaltelement 24 zeigt die Figur 7.

Die adaptiven Schaltelemente 23,24 dürfen die Grundfunktionen der isolierten Ableitung 6 nicht außer Kraft setzen. Daher gelten für die adaptiven Schaltelemente 23,24 folgende Bedingungen:

- Bei einem Blitzeinschlag müssen die adaptiven Schaltelemente 23,24 bei Erreichen ihrer Ansprechspannung geschlossen sein. Damit ist die Vermeidung von schädlichen Gleitentladungen sichergestellt. Die adaptiven Schaltelemente 23,24 müssen den Strom durch die äußere Leitschicht 6d tragen können. Im Fall eines elektrischen Durchschlages der Isolation 6c führen die adaptiven Schaltelemente 23,24 einen durch den Teilwiderstand $R^*$ der äußeren Leitschicht begrenzten Strom und müssen für diesen Wert dimensioniert werden.

- Im Normalbetrieb müssen die Schaltelemente 23,24 für die messtechnische Zustandsprüfung der hochspannungsfesten isolierten Ableitung 6 mit bei einer für Personen und elektrische Komponenten ungefährlichen Messspannung nicht reagieren und somit offen sein. Die Messspannung muss dabei unterhalb der Ansprechspannung der adaptiven Schaltelemente 23,24 liegen.

Mit den beiden adaptiven Schaltelementen 23,24 ist es dann möglich, die Messung des Isolationswiderstandes $R_F$ mit einem Isolationsmessgerät 22 eindeutig auszuführen, wobei keinerlei Demontage der beiden Anschlussteile 3,8 oder eine Unterbrechung der Erdleitung 9,11 mittels einer Trennstellenklemme 10 erforderlich ist. Hierdurch wird die Messung wesentlich vereinfacht und führt zu dem gewünschten Ergebnis einer genauen Bestimmung des Isolationswiderstandes. Eine Personengefährdung durch influenzierte Ladung durch atmosphärische Elektrizität ist wegen der stets vorhandenen elektrischen Verbindung 19,15 der Außenmantelschicht 6d ausgeschlossen.

Neben der Messung des Isolationswiderstandes wird durch die Einschaltung der adaptiven Schaltelemente 23, 24 noch Möglichkeiten für weitere Diagnosen eröffnet:

- Messung des dielektrischen Verlustfaktors tan δ und der Kapazität C,
- Messung elektrischer Teilentladungen,
- Detektion und Lokalisierung eines Isolationsfehlers,
- Detektion einer Beschädigung der äußeren leitenden Schicht.

Die Messungen des dielektrischen Verlustfaktors tan δ und der Kapazität C mit Wechselspannung geben Aufschluss über Produktionsfehler, die Alterung von elektrischen Isolierstoffen und Schädigungen durch elektrische Teilentladungen. Diese Messung erfolgt gemäß Schaltbild in Figur 7 zwischen dem erdnahen Endbereich 9 des elektrischen Leiters 6a und der schwachleitenden Außenmantelschicht 6d, wobei das Isolationsmessgerät 22 durch einen handelsüblichen Netzwerkanalysator oder eine handelsübliche Verlustfaktormessbrücke ersetzt wird.

Die Lokalisierung eines Isolationsfehlers ist neben der Feststellung eines Isolationsfehlers von besonderem Interesse. Dazu wird zur Erläuterung in Figur 7 anstelle des Isolationsmessgerätes 22 ein Kabelfehlerortungsmessgerät üblicher Bauart verwendet, welches die Fehlerortung ermöglicht.

Die vorgeschlagenen adaptiven Schaltelemente 23,24 können mit Schaltelementen üblicher Bauart realisiert werden. Hierzu eignen sich unter anderem:

- Varistoren,
- zylinderförmige Varistoren,
- zylindrische Varistoren mit einer zylindrischen Öffnung zur isolierten Durchführung des elektrischen Leiters 6a,
- Luftfunkenstrecken,
- gasgefüllte Überspannungsableiter,
- antiseriell geschaltete Zenerdioden,
- Thyristoren,
- Gleitentladungsfunkenstrecken,
- IGBT (insulated-gate bipolar transistor),
- andere entsprechend wirkende elektronische Bauelemente.

Diese Bauelemente können gemäß Figur 4 in einem isolierten Gehäuse 13 untergebracht werden.

Entsprechende Messgeräte können dauerhaft angeschaltet werden oder auch nur zu Prüfungszwecken entsprechend angeschlossen werden. Sofern eine dauernde Anschaltung erfolgt, kann eine zentrale Überwachung drahtlos oder drahtgebunden durch eine Überwachungsanlage erfolgen, wobei entsprechende Messsignale auch fernabrufbar sein können, beispielsweise über WLAN und/oder in einer Cloud gespeichert werden und dort abrufbar abgelegt werden.

Als Messgeräte kommen beispielsweise folgende Geräte in Betracht:

- Kabelfehlerortungsgerät 3M Dynatel 356DSP,
- als Impedanzmessgerät E4990A der Firma Keysight Technologies, USA,
- Isolationswiderstandsmessgeräte MIT 2500 CALplus GmbH, Berlin,
- Störspannungsmessgeräte FCKL 1528 der Firma Schwarzbeck, Schönau, Deutschland,
- RF und Mikrowellen R&SSMA100B Signalgenerator der Firma Rhode & Schwarz, Minden,
- Messgeräte für Teilentladungen MPD 600, Omicron, Österreich,
- Kapazitäts- und Verlustfaktormessgerät CDAX 605, Firma Megger.

Bezüglich der besonderen Bauart der infrage kommenden Blitzstromableitvorrichtung, die in der EP 1 760 855 B1 beschrieben wird, wird auf die dortige Beschreibung verwiesen, der Erläuterungen zu den Unteransprüchen 2 bis 13 zu entnehmen sind. Um Wiederholungen diesbezüglich zu vermeiden, wird auf die dortige Offenbarung der Patentschrift in der Beschreibung und der Beschreibung des Ausführungsbeispiels verwiesen.

**Bezugszeichenliste**

| | |
|---|---|
| 1 | Gebäudekörper |
| 2 | Isolator |
| 3 | erstes Anschlussteil |
| 4 | Fangeinrichtung |
| 5 | elektrisch leitendes Verbindungsteil |
| 6 | isolierte Ableitung |
| 7 | Befestigungshalter |
| 8 | zweites Anschlussteil |
| 9 | erdnaher Endbereich von elektrischem Leiter 6a |
| 10 | Trennstellenklemme |
| 11 | Erdleiter |
| 12 | Erdreich |

$$6 \triangleq \begin{cases} 6a & \text{elektrischer Leiter} \\ 6b & \text{innere Leitschicht} \\ 6c & \text{Isolation aus Isolierstoff} \\ 6d & \text{äußere leitende Schicht} \\ 6e & \text{Beschädigung von 6d} \end{cases}$$

| | |
|---|---|
| 13 | Gehäuse mit adaptivem Schaltelement 23 oder 24 |
| 14 | elektr. Leiter (Verbindung zwischen 6a und 6) |
| 15 | Anschlussleitung (6d) |
| 17 | Blitzstrom |
| 18 | Blitzteilstrom |
| 19 | Anschlussleitung (6d) |
| 20 | Potentialausgleichsschiene |
| 21 | Erde |
| 22 | Isolationsmessgerät |
| 23 | erstes adaptives Schaltelement |
| 24 | zweites adaptives Schaltelement |

**Patentansprüche**

1. Blitzstromableitvorrichtung, bestehend aus einer Fangeinrichtung (4), die über einen elektrischen Leiter (6a) mit einer Erdungsanlage (12,21) verbunden ist, wobei der elektrische Leiter (6a) von einer Isolation aus Isolierstoff (6c) umgeben ist, wobei die Isolation (6c) von einer in Leiterlängsrichtung durchgehenden äußeren leitenden Schicht (6d) aus einem leitenden Material umgeben ist, wobei am der Fangeinrichtung (4) zugewandten Endbereich der Schicht (6d) ein erstes Anschlussteil (3) aus elektrisch leitendem Material, angeordnet ist, mittels dessen die Fangeinrichtung (4) und/oder der elektrische Leiter (6a) mit der Schicht (6d) verbunden ist, und wobei am der Erdungsanlage (12,21) zugewandten Endbereich der Schicht (6d) ein zweites Anschlussteil (8) aus elektrisch leitendem Material, angeordnet ist, mittels dessen der elektrische Leiter (6a) und/oder die Erdungsanlage (12,21) mit der die Isolierung (6c) umgebenden Schicht (6d) verbunden ist, wobei die elektrische Verbindung zwischen dem elektrischen Leiter (6a) und der leitenden Schicht (6d) in dem ersten Anschlussteil (3) seriell nur durch ein erstes adaptives Schaltelement (23) hergestellt ist, welches in einem normalen Betriebszustand, bei dem kein Blitzeinschlag vorliegt, die elektrische Verbindung in einer Trennlage , der Öffnungsstellung, hält und welches bei einer Blitzeinschlagstellung durch die dann auftretende oder überschrittene Ansprechspannung des ersten Schaltelementes (23) geschlossen ist und die Verbindung herstellt, wobei im Fall einer messtechnischen Prüfung eine Isolation zwischen dem elektrischen Leiter (6a) und der äußeren leitfähigen Schicht (6d) der hochspannungsfesten isolierten Ableitung (6) besteht, und im Fall von Potentialdifferenzen wie zum Beispiel bei einem Blitzeinschlag eine leitende Verbindung zwischen dem elektrischen Leiter (6a) und der äußeren leitfähigen Schicht (6d) der hochspannungsfesten isolierten Ableitung (6) besteht, **dadurch gekennzeichnet, dass** die elektrische Verbindung zwischen dem elektrischen Leiter (6a) und der leitenden Schicht (6d) in dem zweiten Anschlussteil (8) seriell nur durch ein adaptives zweites Schaltelement (24) hergestellt ist, welches in einem normalen Betriebszustand, bei dem kein Blitzeinschlag vorliegt, die elektrische Verbindung in einer Trennlage, der Öffnungsstellung, hält und welches bei einer Blitzeinschlagstellung durch die dann auftretende oder überschrittene Ansprechspannung des zweiten Schalterelementes (24) geschlossen ist und die Verbindung herstellt, wobei im Fall einer messtechnischen Prüfung eine Isolation zwischen dem elektrischen Leiter (6a) und der äußeren leitfähigen Schicht (6d) der hochspannungsfesten isolierten Ableitung (6) besteht, und im Fall von Potentialdifferenzen wie zum Beispiel bei einem Blitzeinschlag eine leitende Verbindung zwischen dem elektrischen Leiter (6a) und der äußeren halbleitfähigen Schicht (6d) der hochspannungsfesten isolierten Ableitung (6) besteht.

2. Blitzstromableitvorrichtung nach Anspruch 1, **dadurch gekennzeichnet, dass** die Isolation (6c) von einer Schicht (6d) mit einer polymerem Matrix und einem teilchenförmigen Füllstoff, der Zinkoxidpulver, insbesondere dotiertes Zinkoxid-Varistor-Pulver, umfasst, umgeben ist, oder dass der teilchenförmige Füllstoff mit Material aus einem oder mehreren anderen Oxiden oder aus Karbiden, Nitriden, Boriden, Chalkogeniden besteht, welche zu einem Material führen mit ausgeprägten nicht-linearen Varistoreigenschaften, wie zum Beispiel dotiertes SnO2, SiC.

3. Blitzstromableitvorrichtung nach einem der Ansprüche 1 oder 2, **dadurch gekennzeichnet, dass** das Material neben (dotiertem) ZnO-Füllstoff noch weitere Füllstoffe enthält, wie zum Beispiel leitende oder halbleitende Füllstoffe mit konstanter spannungsunabhängiger Leitfähigkeit, Additive für Flammschutz und/oder Verarbeitung und/oder zur Stabilisierung gegen Umwelteinflüsse, Füllstoffe zur mechanischen Verstärkung.

4. Blitzstromableitvorrichtung nach einem der Ansprüche 1 bis 3, **dadurch gekennzeichnet, dass** der dotierte Füllstoff so hergestellt ist, dass jedes Füllstoffpartikel an sich schon eine nichtlineare, varistorartige Strom(T)-Spannung(U)-Kennlinie zeigt, der Übergang vom isolierenden zum nicht-linearen Bereich gezielt eingestellt ist und die Nicht-Linearität $\alpha > 3$ ist.

5. Blitzstromableitvorrichtung nach einem der Ansprüche 1 bis 4, **dadurch gekennzeichnet, dass**

   - die Schicht (6d) einen Füllstoffanteil von dotiertem ZnO im Bereich von 10-80 Volumen-% aufweist,
   - die Schicht (6d) einen Füllstoff mit Partikelgrößen im Bereich von 4-160 $\mu$m aufweist,
   - die Partikel von kugeliger Form sein können oder aus Bruchstücken von Voll- und Hohlkugeln oder massiver Varistor-Keramik bestehen,
   - die Schicht (6d) eine Polymermatrix aufweist aus: Silikon, EPDM, EPR, thermoplastischem Elastomer, Mischungen von diesen Elastomeren, Thermoplasten oder Duromeren.

6. Blitzstromableitvorrichtung nach einem der Ansprüche 1 bis 5, **dadurch gekennzeichnet, dass** die Schicht (6d) bezüglich ihres nicht-linearen elektrischen Verhaltens zur Ableitung von Blitzstromspannungen entlang des elektrischen Leiters (6a) ausgelegt ist und den isolierten Leiter in Umfangsrichtung voll umschließt.

7. Blitzstromableitvorrichtung nach einem der Ansprüche 1 bis 6, **dadurch gekennzeichnet, dass** die Schicht (6d) ein- oder mehrlagig ist und die Leitfähigkeit der einzelnen Schichten gleich oder unterschiedlich ist.

8. Blitzstromableitvorrichtung nach einem der Ansprüche 1 bis 7, **dadurch gekennzeichnet, dass** die Schicht (6d) eine Dicke im Bereich von 0,05-10 mm aufweist, vorzugsweise 0,2-5 mm.

9. Blitzstromableitvorrichtung nach einem der Ansprüche 1 bis 8, **dadurch gekennzeichnet, dass** die Schicht (6d) von einer isolierenden oder hochohmigen/leitenden Schutzschicht umgeben ist.

10. Blitzstromableitvorrichtung nach einem der Ansprüche 1 bis 9, **dadurch gekennzeichnet, dass** die isolierte Ableitung (6) verschiedene Querschnittsformen aufweist, zum Beispiel rund oder flach oval und massiv ist oder aus mehreren Teilleitern besteht.

11. Blitzstromableitvorrichtung nach einem der Ansprüche 1 bis 10, **dadurch gekennzeichnet, dass** die isolierende Schicht und/oder die zusätzlich aufgebrachte Schutzschicht als mechanisch tragendes Element ausgeführt ist, zum Beispiel als glasfaser-verstärkter Kunststoff.

12. Blitzstromableitvorrichtung nach einem der Ansprüche 1 bis 11, **gekennzeichnet durch** eine durchgehende oder auch aus Modulen aufgebaute Einrichtung zur Blitzstromableitung.

13. Blitzstromableitvorrichtung nach einem der Ansprüche 1 bis 12, **dadurch gekennzeichnet, dass** die Schicht aufextrudiert, aufgeschrumpft oder auflackiert ist.

14. Vorrichtung nach einem der Ansprüche 1 bis 13, **dadurch gekennzeichnet, dass** jedes adaptive Schaltelement (23,24) aus einem oder mehreren passiven oder aktiven spannungsschaltenden oder spannungsbegrenzenden Bauteilen besteht.

15. Vorrichtung nach einem der Ansprüche 1 bis 14, **dadurch gekennzeichnet, dass** an eine erdseitige Anschlussklemme und an die erdseitige äußere leitfähige Schicht (6d) ein Isolationsmessgerät zeitweise zum Zwecke einer Messung oder dauerhaft angeschlossen ist.

16. Vorrichtung nach einem der Ansprüche 1 bis 15, **dadurch gekennzeichnet, dass** an die erdseitige Anschlussklemme und die erdseitige Schicht (6d) ein Netzwerkanalysator oder eine Verlustfaktormessbrücke angeschlossen ist, zur Messung des Verlustfaktors tan $\delta$ und/oder der Kapazität C der hochspannungsfesten isolierten Ableitung (6).

17. Vorrichtung nach einem der Ansprüche 1 bis 16, **dadurch gekennzeichnet, dass** ein Teilentladungsmessgerät an die erdseitige Anschlussklemme und die erdseitige Schicht (6d) angeschlossen ist, zum Zwecke der Messung von Teilentladungen der isolierten Ableitung (6).

18. Vorrichtung nach einem der Ansprüche 1 bis 17, **dadurch gekennzeichnet, dass** ein Kabelortungsmessgerät an die erdseitige Anschlussklemme und die erdseitige Schicht (6d) angeschlossen ist, zum Zwecke der Ortung eines Isolationsfehlers der isolierten Ableitung (6).

19. Vorrichtung nach einem der Ansprüche 1 bis 18, **dadurch gekennzeichnet, dass** das adaptive Schaltelement (23,24) unter anderem als

   - mindestens ein Varistor,
   - mindestens eine Luftfunkenstrecke,
   - mindestens ein gasgefüllter Überspannungsableiter,
   - antiseriell geschaltete Zenerdioden,
   - Thyristoren,
   - Gleitentladungsfunkenstrecken,
   - IGBT (insulated-gate bipolar transistor)

   angeordnet ist.

20. Vorrichtung nach einem der Ansprüche 15 bis 19, **dadurch gekennzeichnet, dass** das Messgerät dauerhaft angeschlossen ist und mit einer dezentral angeordneten zentralen Überwachungsvorrichtung kommunizierend verbunden ist, die vorzugsweise drahtlos fernabfragbar ist.

21. Vorrichtung nach einem der Ansprüche 1 bis 20, **dadurch gekennzeichnet, dass** die Isolation (6c) von einer in Längsrichtung durchgehender Schicht (6d) aus einem leitenden Material umgeben ist, das ein nicht-lineares elektrische Verhalten aufweist.

**Claims**

1. A lightning current arrester device having a lightning receptor (4) which is connected to an earthing system (12, 21) via an electrical conductor (6a), the electrical conductor (6a) being surrounded by an insulation of insulating material (6c), the insulation (6c) being surrounded, in the longitudinal direction of the conductor, by a continuous outer conductive layer (6d) of a conductive material, a first connector (3) made of electrically conductive material being arranged at that end region of the layer (6d) which faces the lightning receptor (4), by means of which the lightning receptor (4) and/or the electrical conductor (6a) is connected to the layer (6d), and a second connector (8) made of electrically conductive material being arranged at the end region of the layer (6d) which faces the earthing system (12, 21), by means of which the electrical conductor (6a) and/or the earthing system (12, 21) is connected to the layer (6d) surrounding the insulation (6c), the electrical connection between the electrical conductor (6a) and the conductive layer (6d) in the first connector (3) is established in series only by a first adaptive switching element (23) which, in a normal operating state in which there is no lightning strike, holds the electrical connection in a disconnected position, the open position, and which, in a lightning strike position, is closed by the response voltage of the first switching element (23) which then occurs or is exceeded and establishes the connection, wherein, in the case of a metrological test, there is an insulation between the electrical conductor (6a) and the outer conductive layer (6d) of the high voltage-resistant insulated down conductor (6), and in the case of potential differences, such as in the case of a lightning strike, there is a conductive connection between the electrical conductor (6a) and the outer conductive layer (6d) of the high voltage-resistant insulated down conductor (6), **characterized by that** the electrical connection between the electrical conductor (6a) and the conductive layer (6d) in the second connector (8) is established in series only by an adaptive second switching element (24) which, in a normal operating state in which there is no lightning strike, maintains the electrical connection in an insulating layer, the opening position and which, in a lightning strike position, is closed by the response voltage of the second switching element (24) which then occurs or is exceeded and establishes the connection, wherein, in the case of a metrological test, there is an insulation between the electrical conductor (6a) and the outer conductive layer (6d) of the high voltage-resistant insulated down conductor (6), and in the event of potential differences, such as a lightning strike, there is a conductive connection between the electrical conductor (6a) and the outer semiconductive layer (6d) of the high voltage-resistant insulated down conductor (6).

2. The lightning current arrester device of claim 1, **characterized by that** the insulation (6c) is surrounded by a layer (6d) with a polymeric matrix and a particulate filler comprising zinc oxide powder, in particular doped zinc oxide varistor powder, or that the particulate filler consists of material of one or more other oxides or of carbides, nitrides, borides, chalcogenides, which result in a material with pronounced non-linear varistor properties, such as doped $SnO_2$, SiC.

3. The lightning current arrester device of one of claims 1 or 2, **characterized by that** the material contains other fillers in addition to (doped) ZnO filler, such as conductive or semiconductive fillers with constant voltage-independent conductivity, additives for flame retardancy and/or processing and/or for stabilization against environmental influences, fillers for mechanical reinforcement.

4. The lightning current arrester device of one of claims 1 to 3, **characterized by that** the doped filler is produced in such a way that each filler particle in itself has a non-linear, varistor-like current (T)-voltage (U) characteristic, the transition from the insulating to the non-linear region being specifically adjusted and the nonlinearity $\alpha$ being > 3.

5. The lightning current arrester device of one of claims 1 to 4, **characterized by that**

   - the layer (6d) has a filler content of doped ZnO in the range of 10-80% by volume,
   - the layer (6d) has a filler with particle sizes in the range of 4-160 $\mu$m,
   - the particles may have a spherical shape or consist of fragments of solid and hollow spheres or solid varistor ceramics,
   - the layer (6d) has a polymer matrix consisting of: silicone, EPDM, EPR, thermoplastic elastomer, mixtures of these elastomers, thermoplastics or duromers.

6. The lightning current arrester device of one of claims 1 to 5, **characterized by that** the layer (6d) is designed with respect to its nonlinear electrical behavior for the down conduction of lightning current voltages along the electrical conductor (6a) and completely encloses the insulated conductor in the circumferential direction.

7. The lightning current arrester device of one of claims 1 to 6, **characterized by that** the layer (6d) is single or multilayer and the conductivity of the individual layers is the same or different.

8. The lightning current arrester device of one of claims 1 to 7, **characterized by that** the layer (6d) has a thickness in the range of 0.05-10 mm, preferably 0.2-5 mm.

9. The lightning current arrester device of one of claims 1 to 8, **characterized by that** the layer (6d) is surrounded by an insulating or high-ohmic/conductive protective layer .

10. The lightning current arrester device of one of claims 1 to 9, **characterized by that** the insulated down conductor (6) has different cross-sectional shapes, for example is round or flat-oval and solid or consists of several partial conductors.

11. The lightning current arrester device of one of claims 1 to 10, **characterized by that** the insulating layer and/or the additional protective layer is designed as a mechanically load-bearing element, for example as a glass fiber-reinforced plastic.

12. The lightning current arrester device of one of claims 1 to 11, **characterized by** a continuous or modular device for lightning current down conduction.

13. The lightning current arrester device of one of claims 1 to 12, **characterized by that** the layer is extruded, shrunk on or painted on.

14. The device of one of claims 1 to 13, **characterized by that** each adaptive switching element (23, 24) consists of one or more passive or active voltage-switching or voltage-limiting components.

15. The device of one of claims 1 to 14, **characterized by that** an insulation measuring device is temporarily or permanently connected to an earth-side connection terminal and the earth-side outer conductive layer (6d) for the purpose of a measurement.

16. The device of one of claims 1 to 15, **characterized by that** a network analyzer or a loss factor measuring bridge is connected to the earth-side connection terminal and the earth-side layer (6d) to measure the loss factor tan δ and/or the capacitance C of the high voltage-resistant insulated down conductor (6).

17. The device of one of claims 1 to 16, **characterized by that** a partial discharge meter is connected to the earth-side terminal and the earth-side layer (6d) to measure partial discharges of the insulated down conductor (6).

18. The device of one of claims 1 to 17, **characterized by that** a cable locator is connected to the earth-side connection terminal and the earth-side layer (6d) to locate an insulation fault in the insulated down conductor (6).

19. The device of one of claims 1 to 18, **characterized by that** the adaptive switching element (23, 24) is arranged, inter alia, as

 - at least one varistor,
 - at least one air spark gap,
 - at least one gas-filled surge arrester,
 - anti-serially connected Zener diodes,
 - thyristors,
 - creeping discharge spark gap,
 - IGBT (insulated gate bipolar transistor.

20. The device of one of claims 15 to 19, **characterized by that** the measuring device is permanently connected and communicates with a decentralized central monitoring device, which can be remotely interrogated, preferably wirelessly.

21. The device of one of claims 1 to 20, **characterized by that** the insulation (6c) is surrounded by a layer (6d) of a conductive material which is continuous in the longitudinal direction and has a non-linear electrical behavior.

**Revendications**

1. Dispositif de dérivation du courant de foudre, constitué par un dispositif d'arrêt (4), qui est relié par un conducteur électrique (6a) à un système de mise à la terre (12, 21), le conducteur électrique (6a) étant entouré d'une isolation en matière isolante (6c), l'isolation (6c) étant entourée d'une couche conductrice extérieure (6d) s'étendant dans la direction longitudinale du conducteur et constituée d'un matériau conducteur, une première partie de connexion (3) en matériau électriquement conducteur étant disposée sur la zone d'extrémité de la couche (6d) tournée vers le dispositif d'arrêt (4), au moyen de cette première partie de connexion le dispositif d'arrêt (4) et/ou le conducteur électrique (6a) étant relié à la couche (6d) et, dans la zone d'extrémité de la couche (6d) tournée vers le système de mise à la terre (12, 21), une deuxième partie de connexion (8) en matériau électriquement conducteur étant disposée, au moyen de cette deuxième partie de connexion le conducteur électrique (6a) et/ou le système de mise à la terre (12, 21) étant relié à la couche (6d) entourant l'isolation (6c), la connexion électrique entre le conducteur électrique (6a) et la couche conductrice (6d) dans la première partie de connexion (3) étant établie en série uniquement par un premier élément de commutation adaptatif (23), qui, dans un état de fonctionnement normal, en l'absence d'impact de foudre, maintient la connexion électrique dans une position de séparation, la position d'ouverture et qui, en cas d'une position d'impact de foudre, est fermé par la tension de réponse du premier élément de commutation (23) qui apparaît alors ou est dépassée et établit la liaison, et en cas d'un essai métrologique, il existe une isolation entre le conducteur électrique (6a) et la couche conductrice extérieure (6d) du système de dérivation (6) isolé résistant à la haute tension, et en cas de différences de potentiel, par exemple en cas d'un impact de foudre, il existe une connexion conductrice entre le conducteur électrique (6a) et la couche conductrice extérieure (6d) du système de dérivation (6) isolé résistant à la haute tension, **caractérisé en ce que** la connexion électrique entre le conducteur électrique (6a) et la couche conductrice (6d) dans la deuxième partie de connexion (8) est établie en série uniquement par un deuxième élément de commutation adaptatif (24), qui, dans un état de fonctionnement normal, en l'absence d'impact de foudre, maintient la connexion électrique dans une position de séparation, la position d'ouverture, et qui, en cas de position d'impact de foudre, est fermé par la tension de réponse du deuxième élément de retenue (24) qui apparaît alors ou est dépassée et établit la liaison et, en cas d'un essai métrologique, il existe une isolation entre le conducteur électrique (6a) et la couche conductrice extérieure (6d) du système de dérivation (6) isolé résistant à la haute tension, et en cas de différences de potentiel, par exemple en cas d'un impact de foudre, il existe une connexion conductrice entre le conducteur électrique (6a) et la couche extérieure semi-conductrice (6d) du système de dérivation (6) isolé résistant à la haute tension.

2.  Dispositif de dérivation du courant de foudre selon la revendication 1, **caractérisé en ce que** l'isolation (6c) est entourée d'une couche (6d) comprenant une matrice polymère et une charge particulaire comprenant de la poudre d'oxyde de zinc, en particulier de la poudre de varistance d'oxyde de zinc dopée, ou que la charge particulaire est constituée d'un matériau composé d'un ou plusieurs autres oxydes ou de carbures, nitrures, borures, chalcogénures, qui conduisent à un matériau avec des propriétés de varistance non linéaires prononcées, par exemple $SnO_2$ dopé, SiC.

3.  Dispositif de dérivation du courant de foudre selon une des revendications 1 ou 2, **caractérisé en ce que** le matériau contient, en plus de la charge de ZnO (dopée), d'autres charges, par exemple des charges conductrices ou semi-conductrices avec une conductivité constante indépendante de la tension, des additifs pour l'ignifugation et/ou le traitement et/ou la stabilisation contre les influences environnementales, des charges pour le renforcement mécanique.

4.  Dispositif de dérivation du courant de foudre selon une des revendications 1 à 3, **caractérisé en ce que** la charge dopée est fabriquée de telle sorte que chaque particule de charge présente en soi une caractéristique courant (T)-tension (U) non linéaire de type varistor, la transition de la zone isolante à la zone non linéaire étant réglée de manière ciblée et la non-linéarité $\alpha$ étant de > 3.

5.  Dispositif de dérivation du courant de foudre selon une des revendications 1 à 4, **caractérisé en ce que**

    - la couche (6d) présente une proportion de charge de ZnO dopé dans la plage de 10-80 % en volume,
    - la couche (6d) présente une charge avec des tailles de particules dans la plage de 4-160 $\mu$m,
    - les particules peuvent être de forme sphérique ou se composer de fragments de sphères pleines et creuses ou de céramique de varistance massive,
    - la couche (6d) présente une matrice polymère en: silicone, EPDM, EPR, élastomère thermoplastique, mélanges de ces élastomères, thermoplastiques ou duromères.

6.  Dispositif de dérivation du courant de foudre selon une des revendications 1 à 5, **caractérisé en ce que** la couche (6d) est conçue, en ce qui concerne son comportement électrique non linéaire, pour le système de dérivation de tensions de courant de foudre le long du conducteur électrique (6a) et entoure entièrement le conducteur isolé dans la direction circonférentielle.

7.  Dispositif de dérivation du courant de foudre selon une des revendications 1 à 6, **caractérisé en ce que** la couche (6d) est constituée d'une ou de plusieurs couches et la conductivité des différentes couches est identique ou différente.

**8.** Dispositif de dérivation du courant de foudre selon une des revendications 1 à 7, **caractérisé en ce que** la couche (6d) présente une épaisseur dans la plage de 0,05 à 10 mm, de préférence de 0,2 à 5 mm.

**9.** Dispositif de dérivation du courant de foudre selon une des revendications 1 à 8, **caractérisé en ce que** la couche (6d) est entourée d'une couche de protection isolante ou à haute impédance/conductrice.

**10.** Dispositif de dérivation du courant de foudre selon une des revendications 1 à 9, **caractérisé en ce que** le système de dérivation (6) isolé comporte des différentes formes de section transversale, par exemple est rond ou plat-ovale et massif ou est constitué de plusieurs conducteurs partiels.

**11.** Dispositif de dérivation du courant de foudre selon une des revendications 1 à 10, **caractérisé en ce que** la couche isolante et/ou la couche de protection supplémentaire est réalisée sous forme d'élément porteur mécanique, par exemple sous forme de plastique renforcé de fibres de verre.

**12.** Dispositif de dérivation du courant de foudre selon une des revendications 1 à 11, **caractérisé en** un dispositif continu ou modulaire de dérivation du courant de foudre.

**13.** Dispositif de dérivation du courant de foudre selon une des revendications 1 à 12, **caractérisé en ce que** la couche est extrudée, rétrécie ou vernie.

**14.** Dispositif selon une des revendications 1 à 13, **caractérisé en ce que** chaque élément de commutation adaptatif (23, 24) est constitué d'un ou de plusieurs composants passifs ou actifs de commutation de tension ou de limitation de tension.

**15.** Dispositif selon une des revendications 1 à 14, **caractérisé en ce qu'**un appareil de mesure de l'isolement est raccordé temporairement ou en permanence à une borne de raccordement côté terre et à la couche conductrice extérieure côté terre (6d) en vue d'une mesure.

**16.** Dispositif selon une des revendications 1 à 15, **caractérisé en ce q'**un analyseur de réseau ou un pont de mesure du facteur de perte est raccordé à la borne de raccordement côté terre et à la couche côté terre (6d), pour mesurer le facteur de perte tan δ et/ou de la capacité C du système de dérivation (6) isolé résistant à la haute tension.

**17.** Dispositif selon une des revendications 1 à 16, **caractérisé en ce qu'**un appareil de mesure de décharge partielle est raccordé à la borne de raccordement côté terre et à la couche côté terre (6d), pour mesurer des décharges partielles du système de dérivation isolé (6).

**18.** Dispositif selon une des revendications 1 à 17, **caractérisé en ce qu'**un appareil de mesure de localisation de câble est raccordé à la borne de raccordement côté terre et à la couche côté terre (6d), pour localiser un défaut d'isolation du système de dérivation isolé (6).

**19.** Dispositif selon une des revendications 1 à 18, **caractérisé en ce que** l'élément de commutation adaptatif (23, 24) est disposé, entre autres, comme

- au moins une variance,
- au moins un éclateur à air,
- au moins un parafoudre rempli de gaz
- des diodes Zener connectées en anti-série,
- des thyristors,
- des éclateurs de décharge rampante,
- un IGBT (transistor bipolaire à grille isolée).

**20.** Dispositif selon une des revendications 15 à 19, **caractérisé en ce que** l'appareil de mesure est raccordé en permanence et est relié de manière communicative à un dispositif de surveillance central décentralisé, qui peut être interrogé à distance, de préférence sans fil.

**21.** Dispositif selon une des revendications 1 à 20, **caractérisé en ce que** l'isolation (6c) est entourée d'une couche (6d) continue dans le sens de la longueur en un matériau conducteur qui présente un comportement électrique non linéaire.

Fig. 1

nicht erfindungsgemäß

Fig. 1 a

nicht erfindungsgemäß

Fig. 2

4

4

3

3

6

6

Fig. 3

nicht erfindungsgemäß

Fig. 4

Fig. 5

nicht erfindungsgemäß

Fig. 6

nicht erfindungsgemäß

Fig. 7

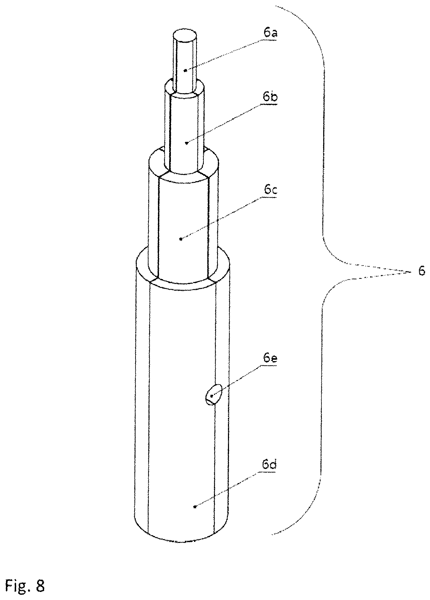

Fig. 8

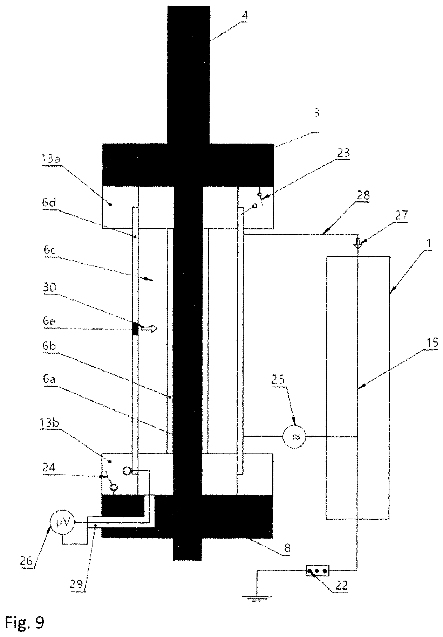

Fig. 9

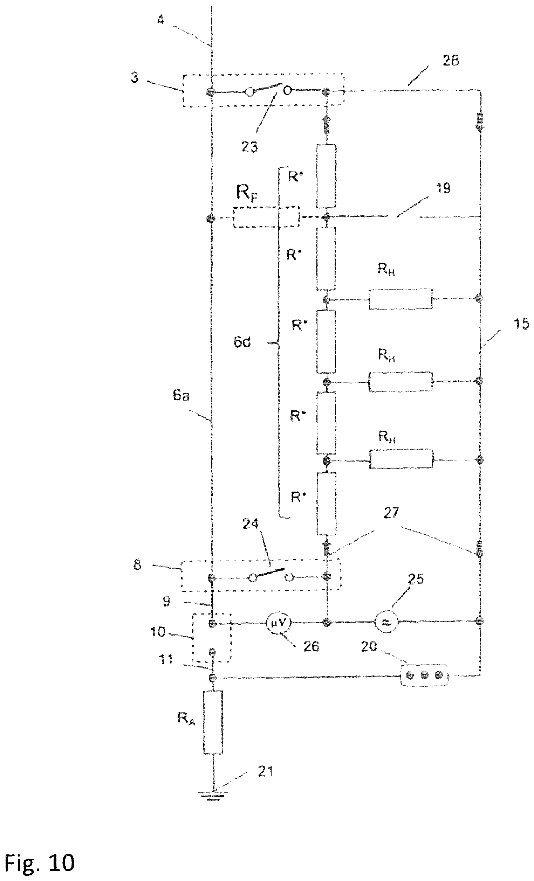

Fig. 10

**IN DER BESCHREIBUNG AUFGEFÜHRTE DOKUMENTE**

**In der Beschreibung aufgeführte Patentdokumente**

- EP 0228984 A2
- EP 1760855 B1